# EUROPEAN PATENT APPLICATION

(11) **EP 1 898 318 A1**
(43) Date of publication of application: **12.03.2008**
(21) Application number: 06018873.7
(22) Date of filing: 08.09.2006
(51) Int. Cl.: G06F 17/30

(54) **Searching method for a patent database system and generating a brief form of search results**

(71) Applicant: Sunonwealth Electric Machine Industry Co., Ltd., Kaohsiung City (TW)
(72) Inventor: Hong, Alex, Kaohsiung City (TW); Huang, Chung-jen, Kaohsiung City (TW)
(74) Representative: Kador & Partner

(57) **Abstract**

A searching method for a patent database system includes the steps of: selecting at least one super-linking object such that the designated super-linking object automatically links at least one classification list containing one or more of first super-linking blocks; selecting at least one of the first super-linking blocks from the classification list so as to automatically generate at least one search result list containing one or more of second super-linking blocks; and selecting at least one of the second super-linking blocks from the search result list so as to automatically link at least one brief form. The brief form generated from the patent database system includes classified fundamental data and at least one set of super-linking blocks. The brief form is formed from classified columns for accommodating the classified fundamental data.

## Description

### BACKGROUND OF THE INVENTION

### 1. Field of the Invention

The present invention relates to a searching method for a patent database system and generating a brief form of search results. Particularly, the present invention relates to the searching method employing object-selecting areas and classification lists for easily/precisely executing a data search in the patent database system. More particularly, the present invention relates to the searching method employing object-selecting areas and classification lists of elements to determine a user-defined search in the patent database system.

### 2. Description of the Related Art

A conventional searching method for a patent database, as described in Taiwanese Patent Publication No. 1221992, entitled "SEARCHING METHOD FOR PATENT DOCUMENT," is applied to a computer system which contains a patent document database. In data searching, a user can input a keyword or a piece of information into the computer system that can automatically generate a set of search results of patent documents in relation to the keyword. The searching method comprises the steps of: step "A", comparing the input keyword with a keyword-category comprehensive table which is stored in the computer system, and contains plural technical categories and plural related characteristic terms corresponding to each of the technical categories; step "B", according to compare results processing in step "A", analyzing at least one or more possible technical categories from contents of the keyword-category comprehensive table so as to determine a list of selected technical categories; step "C", according to the input keyword, processing a search for matches in the patent documents corresponding to the selected technical categories; and step "D", displaying the determined patent documents in response to search results.

Generally, This conventional searching method has several drawbacks as discussed in detail below. In particular, for example, this method is unsuitable for a new or unexperienced user in data searching due to the fact that an unskilled selection in determining correct technical terms of the keywords naturally occurs during use of the patent document database. Disadvantageously, this may result in difficulties in selecting proper keywords, and lower efficiency in data searching.

Another problem naturally occurring during use of such a searching method is due to the fact that the vastness of technical terms may cause users to receive a redundancy of undesired information of search results that are not relevant to the user-defined technical categories. Accordingly, such classification of the keyword-category comprehensive table provided in the patent document database is susceptible to a good possibility of retrieving incorrect search results. Disadvantageously, there is an increase of the possibility of incorrect search results by using such a searching method. In addition to this, a vast number of the search results are given in a search list generated from the computer system. Inevitably, the user must open each of the selected patent documents, including patent names, claims and drawings, to identify matches for the user-defined search rather than to browse through contents of the selected patent documents. However, there is a need for the user to find out irrelevant patent documents from the search results one by one that constitute a longer period of searching time as well as a greater amount of wasting time that is undesirable.

In brief, currently, many patent database systems and searching methods thereof require users to enter keywords or pieces of information of predetermined technical terms which are unfamiliar to ordinary people. Accordingly, the search results retrieved from these patent database systems are always raw data that are not simplified and cannot meet the user-defined search. Because of this, these conventional searching methods has low efficiency and accuracy for data searching, and a waste of searching time. Hence, there is a need for improving the conventional searching method for the patent database system.

As is described in greater detail below, the present invention intends to provide a searching method for a patent database and generating a brief form of search results. The searching method only requires a user to enter a piece of undocumented technical information such that at least one object-selecting area with super-linking objects can be provided. Subsequently, the user can select one of the super-linking objects to retrieve at least one classification list with super-linking blocks that can link at least one brief form of a related patent document of search results. The user can easily select one of the super-linking blocks to identify matches of the brief form for the user-defined search. Finally, the searching method is successful in reducing data-searching time by means of the super-linking objects in such a way as to mitigate and overcome the above problem.

### SUMMARY OF THE INVENTION

The primary objective of this invention is to provide a searching method for a patent database, wherein at least one object-selecting area is prepared for a user to determine a user-defined search. The user can select one of super-linking objects for filtering irrelevant patent documents. Accordingly, the searching method can enhance efficiency and accuracy in data searching.

The secondary objective of this invention is to provide a searching method for generating a brief form of search results from a patent database, wherein at least one object-selecting area is provided to link at least one brief form that is reproduced in a simplified manner. Accordingly, the searching method can achieve a reduced searching time for users.

Another objective of this invention is to provide the searching method for generating a brief form of search results from a patent database, wherein at least one object-selecting area is provided to link at least one brief form that contains information of products and applied fields. Accordingly, the searching method can automatically generate fundamental data of search results without any further operation.

The searching method in accordance with an aspect of the present invention includes the steps of: selecting at least one super-linking object such that the designated super-linking object automatically links at least one classification list containing one or more of first super-linking blocks; selecting at least one of the first super-linking blocks from the classification list so as to automatically generate at least one search result list containing one or more of second super-linking blocks; and selecting at least one of the second super-linking blocks from the search result list so as to automatically link at least one brief form.

The brief form generated from the patent database system in accordance with a separate aspect of the present invention includes classified fundamental data and at least one set of super-linking blocks. The brief form is formed from classified columns for accommodating the classified fundamental data. The classified columns include a primary objective column, a solution column, a feature column, a claim column, a designated figure column and an application data column. The super-linking blocks are selected from full-text super-linking blocks, product super-linking blocks and industrial super-linking blocks.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a flow chart illustrating a searching method for a patent database system in accordance with a preferred embodiment of the present invention;
FIG. 2 is a schematic view illustrating a brief form generated from the patent database system in accordance with a preferred embodiment of the present invention;
FIG. 3 is a schematic view illustrating a classification list formed with a set of super-linking blocks in accordance with a preferred embodiment of the present invention;
FIG. 4 is a schematic view illustrating an object-selecting area formed a set of super-linking objects with object patterns in accordance with a preferred embodiment of the present invention;
FIG. 5 is a schematic view illustrating a selected super-linking object to link a series of classification list in accordance with a preferred embodiment of the present invention; and
FIG. 6 is a schematic view illustrating the brief form of the patent database system generated by the searching method in accordance with a preferred embodiment of the present invention.

### DETAILED DESCRIPTION OF THE INVENTION

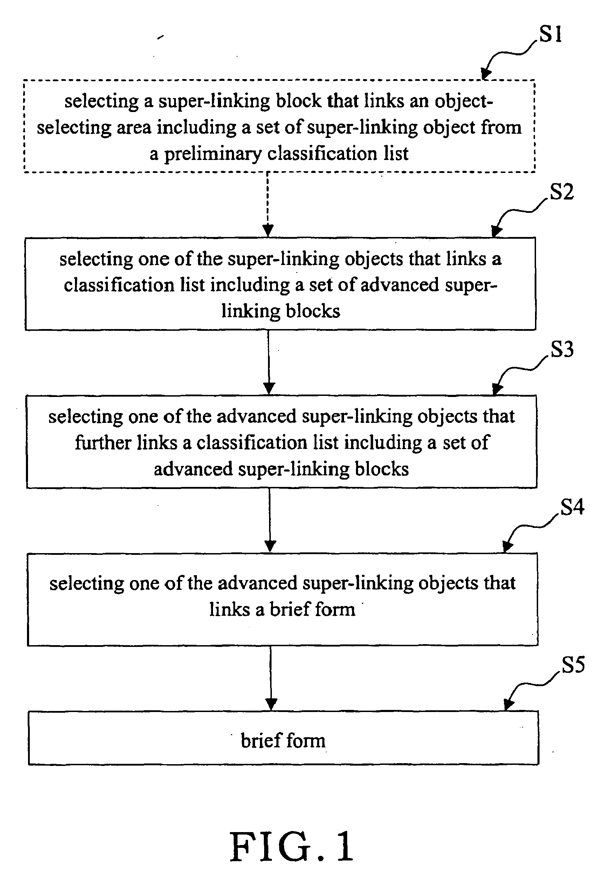

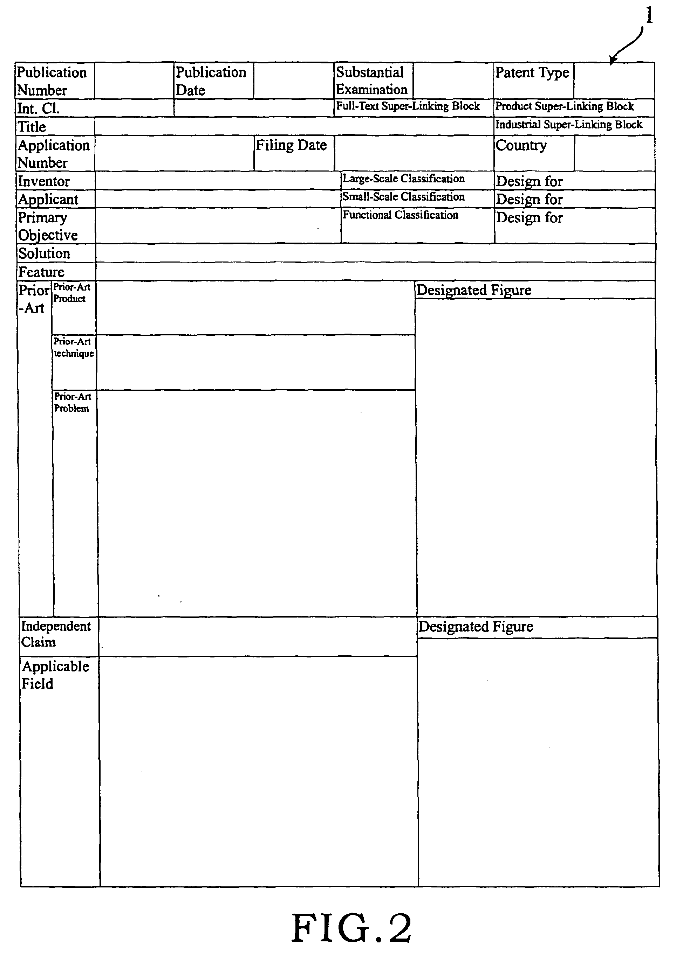

Referring now to FIGS. 1 and 2, a searching method for a patent database system in accordance with the preferred embodiment of the present invention includes the steps of: step "S1" of preliminary classification; step "S2" of object-auxiliary classification; step "S3" of linking classification lists; step "S4" of linking at least one brief form of search results; and step "S5" of displaying the brief form. In a preferred embodiment, the step "S1" may be omitted or executed if desired. Subsequently, the step "S2" may be preferably executed one or more times. Also, the step "S3" may be preferably executed one or more times. Subsequently, the step "S4" may be or not successful in linking at least one brief form (designated numeral 1) of search results. Lastly, the step "S5" may display final search results of the patent database system if the step "S4" is successful in linking at least one brief form.

Still referring to FIG. 2, in this preferred embodiment, a searching system and brief forms 1 of search results are built in a computer system (not shown) which connects with a patent database system (not shown). A user can select one of super-linking objects in data searching in the patent database system. In such a patent database system, each patent is corresponding to one of the brief forms 1. In searching operation, a data search can be directly conducted in a computer system. In an alternative embodiment, a data search can be conducted via LAN (Local Area Network), Internet or a mobile telecommunication system for controlling the computer system so as to access the patent database system. Preferably, the mobile telecommunication system can be selected from a third generation mobile communication system, WCDMA (Wideband Code Division Multiple Access) for example.

Still referring to FIG. 2, the brief form 1 is formed from classified columns for accommodating the classified fundamental data of patents. The classified columns include a primary objective column, a solution column, a feature column, a claim column, a designated figure column and an application data column. For instance, disposed in the claim column is one or more of independent claims or dependent claims. Preferably, disposed in the designated figure column is at least one drawing representing one of embodiments. The application data column may be divided into a publication number column, a publication date column, a substantial examination column, a patent type column, an international classification column, a title column, an application number column, a filing date column, a country column, an inventor column and an applicant column for example.

Still referring to FIG. 2, the brief form 1 further includes at least one set of super-linking blocks, at least one database classification column and at least one prior-art column. The super-linking blocks can be selected from full-text super-linking blocks, product super-linking blocks and industrial super-linking blocks. The full-text super-linking block can link a computer file of a corresponding patent. The product super-linking block can link a product list or an object relevant to the search results. Furthermore, the industrial super-linking block can further link a technical, industrial, commercial, marketing, product-ordering/supplying or inventory database relevant to the search results. Preferably, the database classification columns of the brief form 1 further includes at least one large-scale classification column, at least one small-scale classification column and at least one functional classification column that can precisely link the brief form 1 to serial classified orders of the patent database. Additionally, the prior-art column is divided into a conventional product column, a conventional technique column and a conventional problem column. Disclosed in the conventional product column is a set of related product categories. Also, disclosed in the conventional technique column are explanations of well-known techniques. Furthermore, disclosed in the conventional problem column are explanations of existent problems. Preferably, the brief form 1 further includes an applicable field column that provides suggestions of expected applicable fields.

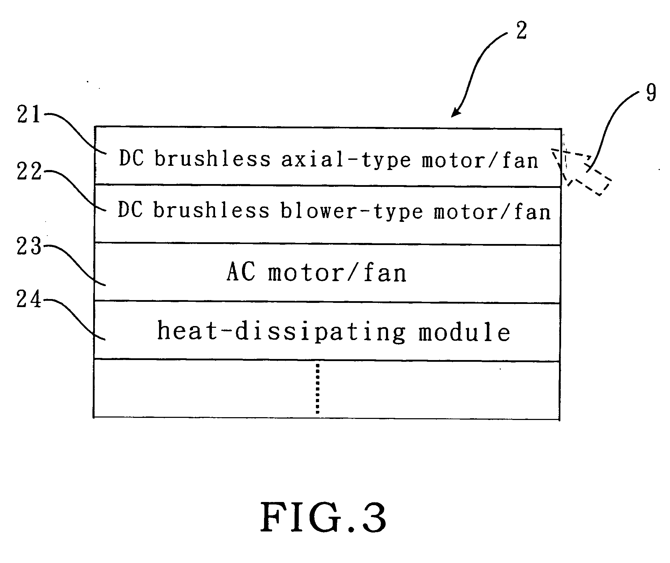

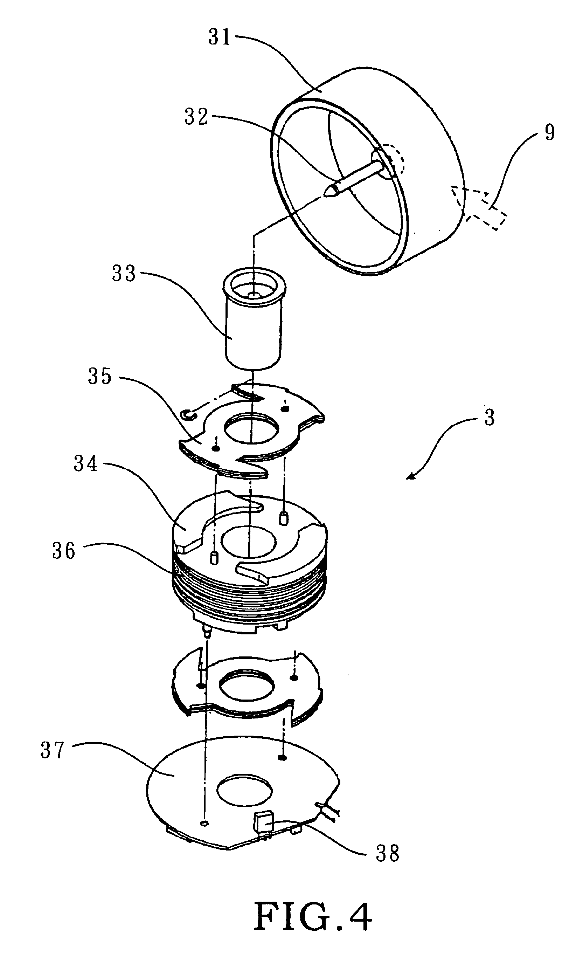

Referring now to FIGS. 1, 3 and 4, the searching method in accordance with the preferred embodiment of the present invention may omit execution of step "S1" or may execute the step "S1" at least one or more times if desired. In step "S1", a user can enter a desire keyword or a desire piece of undocumented or unstructured information into the patent search system of the present invention without requiring entries of standard terminologies. Subsequent to entering the keyword or piece of information a preliminary search is conducted. In the preferred embodiment, the preliminary classification of the searching method may be processed one or more times to generate a preliminary classification list 2 which includes super-linking blocks 21, 22, 23, 24. Once the user selects the super-linking block 21 from the preliminary classification list 2, the selected super-linking block 21 can automatically link an object-selecting area 3 which includes a set of super-linking objects 31, 32, 33, 34, 35, 36, 37, 38 for example. In the preliminary classification list (i.e. main set) 2, several separate super-linking blocks (i.e. sub-sets) 21, 22, 23, 24 are functionally provided to further determine and simplify a user-defined search by automatically classifying a preliminary search result according to related technical fields. In the preferred embodiment, the preliminary classification list 2 separates the preliminary search result into several acceptable options of sub domains of the related technical fields. For instance, the related technical fields may include DC brushless axial-type motor/fan, DC brushless blower-type motor/fan, AC motor/fan, heat-dissipating module, and other motor devices. In preliminary classification, a cursor 9 with a simple point-and-click interface can be used to select one of the super-linking blocks 21, 22, 23, 24, without the need of entering any keyword or technical term. In a preferred embodiment, the cursor 9 can be controlled by one of the mouse, keyboard, joy stick, touch panel and voice-controllable device.

Referring now to FIGS. 1, 4 and 5, the searching method in accordance with the preferred embodiment of the present invention may execute step "S2" at least one or more times according to the needs in pattern classification. In step "S2", at least one of the super-linking objects 31, 32, 33, 34, 35, 36, 37, 38 of the object-selecting area 3, each of which is shown by an object pattern or other equivalent pattern, can be designated to exactly meet the user-defined search. The object-selecting area 3 can separate the search results into several separate super-linking objects by means of various object patterns. Once the super-linking object 31 is selected from the object-selecting area 3 by viewing the designated object pattern, the selected super-linking object 31 can automatically link a first advanced classification list 4 which includes a set of first super-linking blocks 41 and 42 for example. The object-selecting area 3 can function to further divide the sub set into a series of particular components by means of the object patterns of the super-linking objects 31, 32, 33, 34, 35, 36, 37, 38 that may reduce the burden of a good memory for the technical terminologies. In the preferred embodiment, the object-selecting area 3 directs to the scope of a motor/fan field, thereby each of the super-linking objects 31, 32, 33, 34, 35, 36, 37, 38 linking object patterns of motor rotor, rotary shaft, axial tube, motor stator, silicon steel plate, motor coil, circuit board and Hall member respectively, for example. In another preferred embodiment, one or more of the super-linking objects 31, 32, 33, 34, 35, 36, 37, 38 may link another particular motor component set. In object-pattern classification, the cursor 9 can be used to select one of the object patterns of the super-linking objects 31, 32, 33, 34, 35, 36, 37, 38, without the need of entering any keyword or technical term. In a preferred embodiment, the selected super-linking object may link a set of super-linking objects that relate sub-components of the selected super-linking object. For example, the super-linking object 31 is designed for linking object patterns of sub-components of hub, fan wheel, blade, propeller that relate the designated component of the motor rotor.

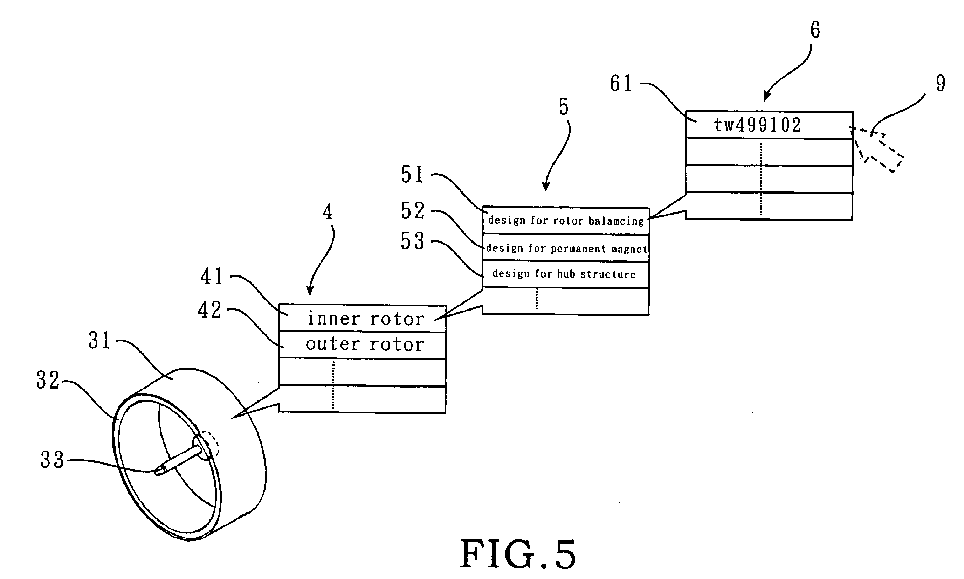

Still referring to FIGS. 1 and 5, the searching method in accordance with the preferred embodiment of the present invention may execute step "S3" at least one or more times according to the needs in advanced classification. In step "S3", at least one of the first super-linking blocks 41, 42 of the first advanced classification list 4 can be designated to further meet the user-defined search. Once the first super-linking block 41 is selected from the first advanced classification list 4, the selected first super-linking block 41 can automatically generate a search result list 6 of search results. Prior to arrival at the search result list 6, the first super-linking block 41, 42 may link at least one second advanced classification list 5 that includes a set of second super-linking blocks 51, 52, 53 which direct to sub-components relative to the components of the first super-linking block 41, 42. To further filter the search results, there provides a series of the first and second advanced classification lists 4 and 5 which can be used to classify the search results according to types, designs, functions or purposes of use. The first advanced classification list 4 can separate the search results into several separate first super-linking blocks 41, 42 according to types of the components. In advanced classification, the first super-linking block 41 may be selected from the advanced classification list 4. The first super-linking blocks 41, 42 direct to types of the motor rotor that may reduce the scope of destination in data searching. For instance, the first super-linking blocks 41, 42 direct to the types of outer rotor and inner rotor or other rotor type. Subsequent to selection of the first super-linking blocks 41 from the first advanced classification list 4 one of the second super-linking blocks 51, 52, 53 can be selected from the second advanced classification list 5 for further advanced classification. Similarly, the second advanced classification list 5 can separate the search results into several separate second super-linking blocks 51, 52, 53 according to the designs of the sub-components. For instance, the second super-linking blocks 51, 52, 53 direct to the designs of balancing arrangement, permanent magnet or hub structure for the motor rotor, or other designs for the motor rotor. In these advanced classifications, the cursor 9 can be used to select one of the super-linking blocks from the first and second advanced classification lists 4 and 5, without the need of entering any keyword or technical term.

Referring now to FIGS. 1, 5 and 6, the searching method in accordance with the preferred embodiment of the present invention includes step "S4" of selecting at least one super-linking block 61 from the search result list 6. In step "S4", the super-linking block 61 is selected from the search result list 6 so as to automatically link at least one brief form 1 of the search results. The search result list 6 functions to determine the final destination of the search results that involves a limited set of related patents which are reduced by types, functions or purposes of use in steps "S1" through "S4". In a preferred embodiment, the super-linking block 61 can link with at least one patent, tw499102 for example. In step "S4", the cursor 9 can be used to select one of the super-linking blocks from the search result list 6, without the need of entering any keyword or technical term.

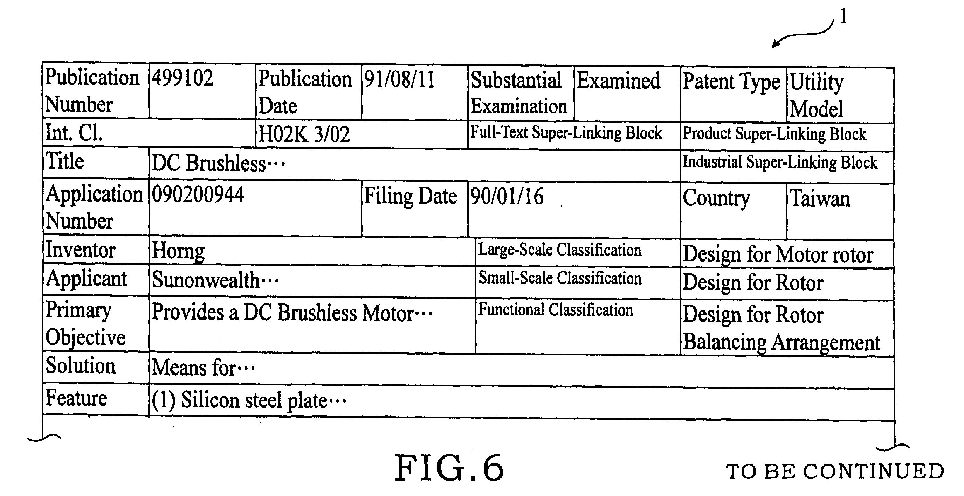

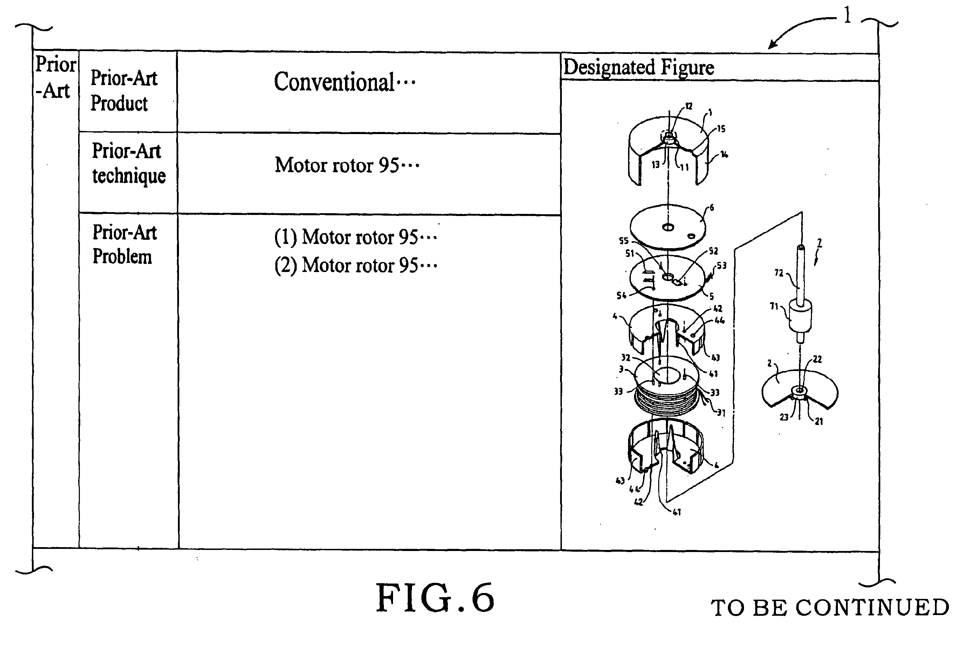

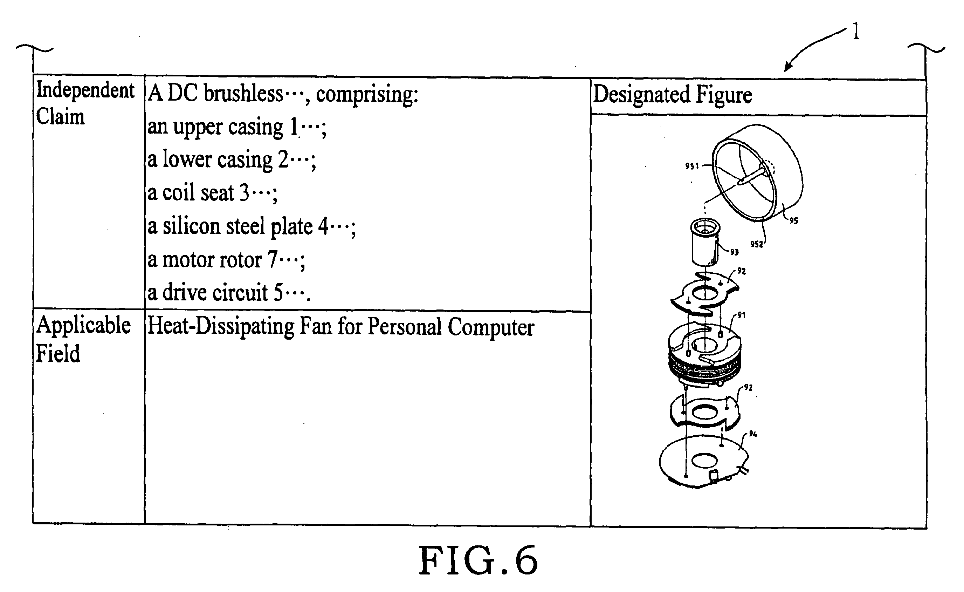

Still referring to FIGS. 1 and 6, after successfully executing step "S4", the brief form 1 may be provided. Constructions of the brief form 1 may be designed according to different types or forms of patents. Users can identify the brief form 1 of the search results by checking one of the primary objective column, the solution column, the feature column, the claim column, the designated figure column and the application data column. Furthermore, one of full-text super-linking blocks, product super-linking blocks and industrial super-linking blocks of the brief form 1 can be selected for more information. Preferably, some suggestions of expected applicable fields can be obtained from an applicable field column of the brief form 1.

As has been discussed above, the conventional patent database system and searching methods thereof require users to enter keywords or pieces of information of predetermined technical terms. Furthermore, the search results retrieved from these patent database systems are always raw data that are not simplified and cannot meet the user-defined search. Conversely, the searching method in accordance with the present invention includes the step of classifying the search results by employing the object patterns of the super-linking objects 31, 32, 33, 34, 35, 36, 37, 38 which are provided in the object-selecting area 3. Accordingly, the super-linking objects 31, 32, 33, 34, 35, 36, 37, 38 are designed for assisting the users to decide which direction of the data search going on. Furthermore, the advanced classification lists 4, 5 are given to further reduce the scope of the search results if one of the super-linking objects 31, 32, 33, 34, 35, 36, 37, 38 is selected. Finally, the search result list 6 will be generated for linking one or more of the brief forms 1. Consequently, it would be advantage to employ the object patterns in the searching method for the patent database, thereby achieving the users' convenience for data search, increasing accuracies for the destination of the search results, and reducing a searching time of the users.

Although the invention has been described in detail with reference to its presently preferred embodiment, it will be understood by one of ordinary skill in the art that various modifications can be made without departing from the spirit and the scope of the invention, as set forth in the appended claims.

## Claims

1. A searching method for a patent database system, comprising the steps of:
selecting at least one super-linking object from an object-selecting area so as to automatically link a classification list which includes a set of super-linking blocks;
selecting at least one of the super-linking blocks from the classification list so as to automatically generate a search result list which includes a set of super-linking blocks; and
selecting at least one of the super-linking blocks from the search result list so as to automatically link at least one brief form of search results.

2. The searching method for a patent database system as defined in claim 1, further comprising the step of selecting at least one super-linking block from a preliminary classification list that automatically links the object-selecting area.

3. The searching method for a patent database system as defined in claim 1, wherein the classification list is used to classify the search results according to types, designs, functions or purposes of use.

4. The searching method for a patent database system as defined in claim 1, wherein the search result list is generated from the patent database system which is built in a computer system.

5. The searching method for a patent database system as defined in claim 4, wherein a user operates the computer system for accessing the patent database system.

6. The searching method for a patent database system as defined in claim 4, wherein the user accesses the patent database system via LAN (Local Area Network), Internet or a mobile telecommunication system.

7. The searching method for a patent database system as defined in claim 6, wherein the mobile telecommunication system is selected from a third generation mobile communication system.

8. The searching method for a patent database system as defined in claim 1, wherein a cursor is used to access the patent database system, the cursor is controlled by one of a mouse, a keyboard, a joy stick, a touch panel and a voice-controllable device.

9. The searching method for a patent database system as defined in claim 1, wherein the brief form includes classified columns of a primary objective column, a solution column, a feature column, a claim column, a designated figure column and an application data column.

10. The searching method for a patent database system as defined in claim 9, wherein the application data column is divided into a publication number column, a publication date column, a substantial examination column, a patent type column, an international classification column, a title column, an application number column, a filing date column, a country column, an inventor column and an applicant column.

11. The searching method for a patent database system as defined in claim 1, wherein the brief form further includes a full-text super-linking block that links a computer file of a corresponding patent.

12. The searching method for a patent database system as defined in claim 1, wherein the brief form further includes a product super-linking block that links a product list or an object relevant to the search results.

13. The searching method for a patent database system as defined in claim 1, wherein the brief form further includes an industrial super-linking block that links a technical, industrial, commercial, marketing, product-ordering/supplying or inventory database relevant to the search results.

14. The searching method for a patent database system as defined in claim 1, wherein the brief form further includes at least one database classification column that precisely links the brief form to serial classified orders of the patent database system.

15. The searching method for a patent database system as defined in claim 1, wherein the brief form further includes a prior-art column which is divided into a conventional product column, a conventional technique column and a conventional problem column.

16. The searching method for a patent database system as defined in claim 1, wherein the brief form further includes an applicable field column that provides suggestions of expected applicable fields.

17. A brief form of a patent database system comprising:
a plurality of patent data stored in a computer system; and
at least one super-linking object provided in the computer system, the super-linking object being capable of linking at least one related patent;
wherein the brief form is generated from the patent database system by selecting the designated super-linking object from an object-selecting area.

18. The brief form of a patent database system as defined in claim 17, wherein the brief form includes classified columns of a primary objective column, a solution column, a feature column, a claim column, a designated figure column and an application data column.

19. The brief form of a patent database system as defined in claim 17, wherein the brief form is further linked with a plurality of separate super-linking blocks which include full-text super-linking blocks, product super-linking blocks and industrial super-linking blocks.

20. The brief form of a patent database system as defined in claim 17, wherein the computer system is operated via LAN (Local Area Network), Internet or a mobile telecommunication system for accessing the patent database system.

21. The brief form of a patent database system as defined in claim 20, wherein the mobile telecommunication system is selected from a third generation mobile communication system.

22. The brief form of a patent database system as defined in claim 18, wherein the application data column is divided into a publication number column, a publication date column, a substantial examination column, a patent type column, an international classification column, a title column, an application number column, a filing date column, a country column, an inventor column and an applicant column.

23. The brief form of a patent database system as defined in claim 19, wherein the full-text super-linking block links a computer file of a corresponding patent.

24. The brief form of a patent database system as defined in claim 19, wherein the product super-linking block links a product list or an object relevant to the search results.

25. The brief form of a patent database system as defined in claim 19, wherein the industrial super-linking block links a technical, industrial, commercial, marketing, product-ordering/supplying or inventory database relevant to the search results.

26. The brief form of a patent database system as defined in claim 17, wherein the brief form further includes at least one database classification column that precisely links the brief form to serial classified orders of the patent database system.

27. The brief form of a patent database system as defined in claim 17, wherein the brief form further includes a prior-art column which is divided into a conventional product column, a conventional technique column and a conventional problem column.

28. The brief form of a patent database system as defined in claim 17, wherein the brief form further includes an applicable field column that provides suggestions of expected applicable fields.

## Amended claims

### Amended claims in accordance with Rule 137(2) EPC.

**1.** A searching method for a patent database system, comprising the steps of:
selecting at least one super-linking object from an object-selecting area so as to automatically link a classification list which includes a set of super-linking blocks;
selecting at least one of the super-linking blocks from the classification list so as to automatically generate a search result list which includes a set of super-linking blocks and is used to classify the search results according to types, designs, functions or purposes of use, and
selecting at least one of the super-linking blocks from the search result list so as to automatically link at least one brief form of search results.

**2.** The searching method for a patent database system as defined in claim 1, further comprising the step of selecting at least one super-linking block from a preliminary classification list that automatically links the object-selecting area.

**3.** The searching method for a patent database system as defined in claim 1, wherein the search result list is generated from the patent database system which is built in a computer system.

**4.** The searching method for a patent database system as defined in claim 3, wherein a user operates the computer system for accessing the patent database system.

**5.** The searching method for a patent database system as defined in claim 3, wherein the user accesses the patent database system via LAN (Local Area Network), Internet or a mobile telecommunication system.

**6.** The searching method for a patent database system as defined in claim 5, wherein the mobile telecommunication system is selected from a third generation mobile communication system.

**7.** The searching method for a patent database system as defined in claim 1, wherein a cursor is used to access the patent database system, the cursor is controlled by one of a mouse, a keyboard, a joy stick, a touch panel and a voice-controllable device.

**8.** The searching method for a patent database system as defined in claim 1, wherein the brief form includes classified columns of a primary objective column, a solution column, a feature column, a claim column, a designated figure column and an application data column.

**9.** The searching method for a patent database system as defined in claim 8, wherein the application data column is divided into a publication number column, a publication date column, a substantial examination column, a patent type column, an international classification column, a title column, an application number column, a filing date column, a country column, an inventor column and an applicant column.

**10.** The searching method for a patent database system as defined in claim 1, wherein the brief form further includes a full-text super-linking block that links a computer file of a corresponding patent.

**11.** The searching method for a patent database system as defined in claim 1, wherein the brief form further includes a product super-linking block that links a product list or an object relevant to the search results.

**12.** The searching method for a patent database system as defined in claim 1, wherein the brief form further includes an industrial super-linking block that links a technical, industrial, commercial, marketing, product-ordering/supplying or inventory database relevant to the search results.

**13.** The searching method for a patent database system as defined in claim 1, wherein the brief form further includes at least one database classification column that precisely links the brief form to serial classified orders of the patent database system.

**14.** The searching method for a patent database system as defined in claim 1, wherein the brief form further includes a prior-art column which is divided into a conventional product column, a conventional technique column and a conventional problem column.

**15.** The searching method for a patent database system as defined in claim 1, wherein the brief form further includes an applicable field column that provides suggestions of expected applicable fields.

**16.** A brief form of a patent database system comprising:
a plurality of patent data stored in a computer system;
**characterised in that**
at least one super-linking object is provided in the computer system, the super-linking object being capable of linking at least one related patent;
wherein the brief form is generated from the patent database system by selecting the designated super-linking object from an object-selecting area; and includes classified columns of a primary objective column, a solution column, a feature column, a claim column, a designated figure column and an application data column.

**17.** The brief form of a patent database system as defined in claim 16, wherein the brief form is further linked with a plurality of separate super-linking blocks which include full-text super-linking blocks, product super-linking blocks and industrial super-linking blocks.

**18.** The brief form of a patent database system as defined in claim 16, wherein the computer system is operated via LAN (Local Area Network), Internet or a mobile telecommunication system for accessing the patent database system.

**19.** The brief form of a patent database system as defined in claim 18, wherein the mobile telecommunication system is selected from a third generation mobile communication system.

**20.** The brief form of a patent database system as defined in claim 16, wherein the application data column is divided into a publication number column, a publication date column, a substantial examination column, a patent type column, an international classification column, a title column, an application number column, a filing date column, a country column, an inventor column and an applicant column.

**21.** The brief form of a patent database system as defined in claim 17, wherein the full-text super-linking block links a computer file of a corresponding patent.

**22.** The brief form of a patent database system as defined in claim 17, wherein the product super-linking block links a product list or an object relevant to the search results.

**23.** The brief form of a patent database system as defined in claim 17, wherein the industrial super-linking block links a technical, industrial, commercial, marketing, product-ordering/supplying or inventory database relevant to the search results.

**24.** The brief form of a patent database system as defined in claim 16, wherein the brief form further includes at least one database classification column that precisely links the brief form to serial classified orders of the patent database system.

**25.** The brief form of a patent database system as defined in claim 16, wherein the brief form further includes a prior-art column which is divided into a conventional product column, a conventional technique column and a conventional problem column.

**26.** The brief form of a patent database system as defined in claim 16, wherein the brief form further includes an applicable field column that provides suggestions of expected applicable fields.
